# EUROPEAN PATENT APPLICATION

(11) **EP 0 564 267 A2**
(43) Date of publication of application: **06.10.1993**
(21) Application number: 93302511.6
(22) Date of filing: 31.03.1993
(51) Int. Cl.: C08L 23/16, C08L 23/02, C08L 23/10

(54) **Elastomer composition for light-resistant covering materials and light-resistant covering materials for industrial parts comprising the same**

(30) Priority: 31.03.1992 JP 74935/92
(71) Applicant: SUMITOMO CHEMICAL COMPANY, LIMITED, Osaka (JP)
(72) Inventor: Hikasa, Tadashi, Sodegaura-shi, Chiba 299-02 (JP); Hosoda, Satoru, Ichihara-shi, Chiba 290 (JP); Hamanaka, Tatsuo, Ichihara-shi, Chiba 299-01 (JP); Mendori, Hiroaki, Ichihara-shi, Chiba 299-01 (JP)
(74) Representative: Cresswell, Thomas Anthony

(57) **Abstract**

An elastomer composition for light-resistant covering materials, and covering materials for industrial parts which comprise the composition, are obtainable by partially cross-linking a mixture comprising (A) 100 parts by weight in total of at least one terpolymer rubber having a 100°C Mooney viscosity (ML₁₊₄ 100°C) of 30 to 350 selected from ethylene-propylene-dicyclopentadiene terpolymer rubbers and ethylene-butene-1-dicyclopentadiene terpolymer rubbers, (B) 5 to 150 parts by weight of an olefinic polymer and (C) 0 to 150 parts by weight of a mineral oil or a mixture comprising 40 to 95% by weight of an oil-extended ethylene terpolymer rubber and 5 to 60% by weight of an olefinic polymer, the oil-extended ethylene terpolymer rubber comprising a terpolymer rubber component comprising at least one ethylene terpolymer rubber having a 100°C Mooney viscosity (ML₁₊₄ 100°C) of 30 to 350 ethylene propylene-dicyclopentadiene terpolymer rubbers and ethylene-butene-1-dicyclopentadiene terpolymer rubbers and 150 parts by weight or less of a mineral oil per 100 parts by weight of the terpolymer rubber component.

## Description

The present invention relates to elastomer compositions used for light-resistant covering materials and light-resistant covering materials for industrial parts comprising the compositions. More particularly, it relates to olefinic thermoplastic elastomer compositions for light-resistant covering materials which are excellent in light resistance and are able to substitute for flexible polyvinyl chloride. It further relates to light-resistant covering materials for industrial parts, said materials comprising the above mentioned elastomer compositions.

Use of thermoplastic elastomers is being developed in a wide variety of fields of industrial parts such as automobile parts, appliance parts and sundries taking advantage of characteristics that they require no vulcanizing step and are processable by molding machines for thermoplastic resins. Among them, olefinic thermoplastic elastomer compositions are known (Japanese Patent Kokai No.48-26838).

Hitherto, high-graded shaped articles of thermoplastic resins are known, which have enhanced appearance and soft hand by laminating covering materials on the surfaces of the shaped articles. The covering materials are flexible polyvinyl chloride and olefinic thermoplastic elastomers backed with a foamed layer such as of polyolefin, polyurethane resin or the like in order to impart cushioning properties.

However, polyvinyl chloride covering materials are in specific gravity and inferior in light resistance. Surface appearance is greatly deteriorated when the materials are directly exposed to sunlight. Furthermore, a problem is encountered in that, for instance, wind-shields of automobils cloud, when interior trims are made of such polyvinyl chloride covering materials, since the covering materials contain a large amount of plasticizers for providing flexibility. Moreover, there are problems that thermal disposal of wastes is impossible from a view point of environmental health, since polyvinyl chloride when burned generates hydrochloric acid gas. Furthermore, processing apparatuses are corroded.

Further improvement has been desired for conventional olefinic thermoplastic elastomers, since they are hardly applied to the uses which require superior light resistance, though the above problems encountered for polyvinyl chloride are partly solved.

An object of the present invention is to solve the problems encountered in the conventional techniques, and to provide an olefinic elastomer composition suitable for use as light-resistant covering materials which require large light resistance and covering materials for industrial parts which comprises said composition.

After intensive research, the inventors found that ethylene-propylene-dicyclopentadiene terpolymer rubber and/or ethylene-butene-1-dicyclopentadiene terpolymer rubber provide a thermoplastic elastomer composition much superior in light resistance to conventional elastomer compositions obtained, for example, using ethylene-propylene-ethylidenenorbornene terpolymer rubbers. They further found that covering materials comprising said composition are suitable for covering materials of industrial parts which require a large light resistance.

According to the present invention, an elastomer composition for light-resistant covering materials is obtained by partial crosslinking of a mixture comprising (A) 100 parts by weight of a rubber having a 100°C Mooney viscosity (ML₁₊₄ 100°C) of 30-350, said (A) being ethylene-propylene-dicyclopentadiene terpolymer rubber and/or ethylene-butene-1-dicyclopentadiene terpolymer rubber, (B) 5-150 parts by weight of an olefinic polymer and (C) 0-150 parts by weight of a mineral oil, (B) and (C) being based on 100 parts by weight of the terpolymer rubber (A).

The present invention further provides an elastomer composition for light-resistant covering materials which is obtained by partial crosslinking of a mixture comprising (D) 40-95% by weight of the oil-extended ethylene terpolymer rubber and (B) 5-60% by weight of an olefinic polymer, said (D) comprising 150 parts by weight or less of a mineral oil (C) every 100 parts by weight of a rubber (A) having a 100°C Mooney viscosity (ML₁₊₄ 100°C) of 30-350, said (A) being ethylene-propylene-dicyclopentadiene terpolymer rubber and/or ethylene-butene-1-dicyclopentadiene terpolymer rubber.

The present invention further provides a light-resistant covering material for industrial parts which comprises the above elastomer composition.

The present invention will be explained in detail.

The ethylene-propylene-dicyclopentadiene terpolymer rubber and/or the ethylene-butene-1-dicyclopentadiene terpolymer rubber (A) having a 100°C Mooney viscosity (ML₁₊₄ 100°C) of 30-350 are preferably ethylene-propylenedicyclopentadiene terpolymer rubbers having a propylene content of preferably 10-55% by weight, more preferably 20-40% by weight, a dicyclopentadiene content of preferably 1-30% by weight, more preferably 3-20% by weight and ethylene content the balance (hereinafter referred to as "EPDM-D"). The 100°C Mooney viscosity (ML₁₊₄ 100°C) of the terpolymer rubber (A), when used in the form of the oil-extended ethylene terpolymer rubber (D) referred to hereinafter, is preferably 80-350, more preferably 120-350, further preferably 140-300. ML₁₊₄ 100°C of the terpolymer rubber (A), when this is not used in the form the oil-extended ethylene terpolymer rubber (D), is preferably 30-150, more preferably 40-120, further preferably 50-100.

If the propylene content is smaller than 10% by weight, flexibility tends to be lost and if it is greater than 55% by weight, mechanical properties tend to deteriorate. If the dicyclopentadiene content is smaller than 1% by weight, mechanical properties tend to deteriorate and if it is greater than 30% by weight, injection moldability tend to deteriorate. If the 100°C Mooney viscosity (ML₁₊₄ 100°C) is smaller than 30, mechanical properties are lost and if it is greater than 350, appearance of molded articles is damaged.

The olefinic polymers (B) used in the present invention are preferably polypropylenes and copolymers of propylene and an α-olefin having two or more carbon atoms. Examples of the α-olefin having two or more carbon atoms are ethylene, 1-butene, 1-pentene, 3-methyl-1-butene, 1-hexene, 1-decene, 3-methyl-1-pentene, 4-methyl-1-pentene and 1-octene. Melt flow rate of these polymers is in the range of 0.1-100 g/10 min, preferably in the range of 0.5-50 g/10 min. If the melt flow rate is smaller than 0.1 g/10 min or greater than 100 g/10 min, the polymers have difficulty in processability.

The mineral oil (C) used in the present invention are petroleum fractions of high boiling points useful for an improvement in processability or mechanical properties. They include paraffinic, naphthenic and aromatic petroleum fractions and the paraffinic ones are preferred. When aromatic components increase, contamination occurs and light resistance decreases.

The oil-extended ethylene terpolymer rubbers (D) used in the present invention comprise 150 parts by weight or less, preferably 20-150 parts by weight, more preferably 30-120 parts by weight of the mineral oil (C) every 100 parts by weight of the terpolymer rubber (A). When 100°C Mooney viscosity (ML₁₊₄ 100°C) of the terpolymer rubber (A) is relatively large, flowability of the resulting elastomer composition is small and extrusion processability and injection moldability are damaged, so long as no mineral oil is added. On the other hand, if content of the mineral oil is greater than 150 parts by weight, plasticity remarkably increases to cause deterioration of processability and besides, performances of the molded articles such as properties are deteriorated. The 100°C Mooney viscosity (ML₁₊₄ 100°C) of the oil-extended ethylene terpolymer rubber (D) is preferably 30-150, more preferably 40-100. If it is smaller than 30, mechanical characteristics are lost and if it is greater than 150, molding becomes difficult.

Properties of oil-extended ethylene terpolymer rubbers (oil-extended EPDM-D) and process for preparing them are explained taking EPDM-D for example.

Incorporation of a large amount of the mineral oil into EPDM-D having ML₁₊₄ 100°C of as large as 80-350 gives olefinic elastomer compositions which satisfy simultaneously an improvement in processability due to ensuring flexibility and increase of flowability as well as an improvement in mechanical characteristics.

In general, mineral oil are added to olefinic elastomer compositions as flowability improvers. According to the research conducted by the inventors, addition of 40 parts by weight or more of the mineral oil to 100 parts by weight of EPDM-D, brings readily about bleeding of the mineral oil on the surface of the elastomer composition, resulting in a stain and tackiness, when no oil-extended EPDM-D is used. However, the use of an oil-extended EPDM-D in which 150 parts by weight or smaller of the mineral oil has been incorporated into 100 parts by weight of EPDM-D having an ML₁ ₊ ₄ 100°C of, for example, 80-350 gives elastomer compositions having little bleeding of the mineral oil, neither stain nor tackiness and excellent properties in breaking strength, breaking extension and compression set. No bleeding of the mineral oil in spite of a large amount of the mineral oil is considered due to a raise in the upper limit of allowable oil-extension of the mineral oil on the basis of EPDM-D of relatively large Mooney viscosity and uniform dispersion of the mineral oil which has been previously and properly added in EPDM-D.

Oil extension of EPDM-D is performed by known methods. For example, EPDM-D and the mineral oil are mechanically kneaded in apparatuses such as rolls and Banbury mixers. Another method is adding a given amount of the mineral oil to an EPDM-D solution and then removing the solvent by steam stripping or the like. Preference is to use an EPDM-D solution obtained by polymerization, from a view point of operation.

In the present invention, blending ratio of the components in the mixture of terpolymer rubber (A), olefinic polymer (B) and mineral oil (C) or in the mixture of oil-extended ethylene terpolymer rubber (D) and olefinic polymer (B) is as follows. In the former case, an amount of the component (B) is 5-150 parts by weight and that of the component (C) is 0-150 parts by weight all every 100 parts by weight of the component (A). In the latter case, an amount of the component (D) containing 1-150 parts by weight of the component (C) every 100 parts by weight of the component (A) is 40-95% by weight and that of the component (B) is 5-60% by weight. In these mixtures, if an amount of the component (B) of olefinic polymer is smaller than 5 parts by weight in the former case or smaller than 5% by weight in the latter case, flowability decreases to result in bad appearance of molded articles. If it is greater than 150 parts by weight in the former case or greater than 60% by weight in the latter case, flexibility degrades.

Partial crosslinking of the mixture comprising the componet (A), component (B) and component (C) or the mixture comprising the component (D) and component (B) is effected in the presence of crosslinking agents of organic peroxides. The organic peroxides include, for example, 2,5-dimethyl-2,5-di(t-butylperoxy)hexane, 2,5-dimethyl-2,5-di(t-butylperoxy)hexyne-3, 1,3-bis-(t-butylperoxyisopropyl)benzene, 1,1-di(t-butylperoxy)-3,3,5-trimethylcyclohexane, 2,5-dimethyl-2,5-di(peroxybenzoyl)hexyne-3 and dicumyl peroxide. Among them, preferred is 2,5-dimethyl-2,5-di(t-butylperoxy)hexane from points of smell and scorching. An addition amount of the organic peroxide is in the range of 0.01-2.0 parts by weight on the basis of 100 parts by weight in total of the terpolymer rubber (A) and olefinic polymer (B). If it is smaller than 0.01 part by weight, the effect of crosslinking reaction is small and if it is greater than 2.0 parts by weight, control of the reaction is very hard and besides, such amount is not economical.

Partial crosslinking with organic peroxides may be effected in the presence of crosslinking aids. They are, for example, N,N'-m-phenylenebismaleimide, toluylenebismaleimide, p-quinone dioxime, nitrobenzene, diphenylguanidine, trimethylolpropane, divinylbenzene, ethylene glycol dimethacrylate, polyethylene glycol dimethacrylate, trimethylolpropane trimethacrylate and allyl methacrylate. Addition of such compound serves for a homogeneous and gentle crosslinking reaction and a reaction between the terpolymer rubber and the olefinic polymer, resulting in an improvement in mechanical properties.

An addition amount of the crosslinking aids is in the range of 0.01-4.0 parts by weight, preferably 0.05-2.0 parts by weight every 100 parts by weight in all of the terpolymer rubber (A) and olefinic polymer (B). If it is smaller than 0.01 part by weight, the effect is not expected and if it exceeds 4 parts by weight, this is not economical.

One of methods for preparing the elastomer composition by partially crosslinking the mixture is explained below.

Terpolymer rubber (A), olefinic polymer (B), mineral oil (C) and organic peroxides and optionally, crosslinking aids and others are mixed at given ratios and subjected to a dynamic heat treatment. That is, the mixture is molten and kneaded. Non-open type Banbury mixers, twin-screw extruders and the like are used to this effect. Kneading temperature is usually within the range of 150-300°C and kneading time is usually within the range of 1-30 minutes. If necessary, there may be further added auxiliary materials such as inorganic fillers, antioxidants, weather-resistant agents, antistatic agents and coloring pigments. When terpolymer rubber (A) has a relatively large Mooney viscosity, a preferred method comprises previously preparing oil-extended ethylene terpolymer rubber (D) by blending terpolymer rubber (A) and mineral oil (C). Then the oil-extended ethylene terpolymer rubber (D) and olefinic polymer (B) and, if necessary, additionally crosslinking aids and the auxilary materials are blended at given ratios, at a temperature within the range of 150-250°C in, for example,a non-open type Banbury mixer, until sufficient kneading and homogenizing are effected. The resulting composition is further blended with organic peroxides in enclosed mixers such as tumblers, super mixers or the like and then the resulting blend is subjected to a dynamic heat treatment at a temperature within the range of 200-300°C in twin-screw continuous extruders which provide a strong kneading force. The auxiliary materials are added at any stages of preparation of the composition, at the time of processing or at the time of use of the product after processed.

One of methods for molding the resulting elastomer composition to prepare covering materials for industrial parts is as follows.
① Multilayer extrusion molding of the elastomer composition as a covering layer.
② Two-layer injection molding or insert molding of the elastomer composition as a covering layer.
③ Molding the elastomer composition into a sheet (if necessary, multi-layer with a polyolefin resin sheet or a polyolefin foamed sheet) by a T-die sheet forming machine and subjecting the sheet to vacuum forming.
④ Simultaneous molding of the sheet of ③ with a polystock (resin/woodflour mixture) or a fiber-reinforced plastic.
⑤ Stamping molding of the sheet of ③ with a plastic (if desired, a plastic containing inorganic fillers).

Use of the covering materials for industrial parts of the present invention are:

Automobile parts: internal covering materials such as instrument panels, console boxes, arm rests, head rests, door trims, rear panels, pillar trims, sunvisors, trunk room trims, trunk lid trims, air bag containers, seat buckles, head liners, glove boxes, steering wheel covers and ceiling materials.

Appliance parts and office appliance parts: covering materials of housings such as television, video decks, washing machines, driers, cleaners, coolers, air conditioners, remote controller cases, radar ranges, toasters, coffee makers, pots, jars, dinnerware washing machines, electric shavers, hair driers, microphones, headphones, beauty culture machines, CD cassette containers, personal computers, typewriters, projectors, telephone sets, copying machines, facsimile telegraphs, and telex devices.

Sports goods: covering materials for sports shoes decorative parts, grips of rackets and sports devices and motor bicycles and tricycles.

Building parts and housing parts: covering materials for furniture, desks and chairs, covering materials for gates, doors and fences, covering materials for wall decorative materials, ceiling decorative materials and curtain walls, interior floorings for kitchens, lavatories, bathrooms, exterior floorings for veranda, terrace, balcony and car port, and cloths such as entrance mats, table cloths, coasters and ashtray cloths.

Other industrial parts: grips and hoses of electric tools and covering materials thereof and packing materials.

In addition, covering materials for bags, cases, files, pocket note books, albums, stationaries, camera bodies and toys such as dolls and outer frames of framed pictures and covering materials thereof.

The present invention will be explained in more detail by the following nonlimiting examples.

The following tests are effected for measurement of properties in the examples and comparative examples.
(1) Mooney viscosity (ML₁₊₄ 100°C): ASTM D-927-57T; the following formula is applied to EPDM-D.
   log (ML1/ML2)=0.0066 ( Δ PHR)
   wherein
   ML1: Mooney viscosity of EPDM-D.
   ML2: Mooney viscosity of oil-extended EPDM-D.
   Δ PHR: Oil-extension amount per 100 parts by weight of EPDM-D
(2) Breaking extension (%): JIS K-6301 (JIS-No.3 dumbbell, pulling rate 200 mm/min).
(3) Evaluation of light resistance: The sample was irradiated with ultraviolet ray (UV) using UV fadeometer (UV-Long Life Fadeometer manufactured by Suga Test Machine Co.) for 500 hours at 83°C under water-free condition. Breaking extensions before and after the irradiation are measured and retension of breaking extension (%) is obtained.

### Example 1

To a solution of EPDM-D1 (5% by weight, non-conjugated diene = dicyclopentadiene (DCPD), iodine value = 8, propylene = 32% by weight, and ML₁₊₄ 100°C=242), in hexane was added a mineral oil (100 parts by weight, Diana Process Oil PW-380 manufactured by Idemitsu Kosan Co.) based on 100 parts by weight of EPDM-D1, and then the solution was subjected to steam stripping to remove the solvent to prepare oil-extended EPDM-D1 (ML₁₊₄ 100°C=53). The oil-extended EPDM-D1 (70 parts by weight), polypropylene-1 (30 parts by weight, MFR=1.3 g/10 min, ethylene = 4.5% by weight, random type), N,N'-m-phenylenebismaleimide (0.4 part by weight, Sumifine BM manufactured by Sumitomo Chemical Co., Ltd.) as a crosslinking aid, Sumisove 300 (0.3 part by weight, manufactured by Sumitomo Chemical Co., Ltd.) and Tinuvin 622 (0.4 part by weight, manufactured by Ciba-Geigy Corp.) as light stabilizers, and Irganox 1010 (0.2 part by weight, manufactured by Ciba-Geigy Corp.) as a heat stabilizer were kneaded in a Banbury mixer at a temperature within the rage of 170-200°C for 7 minutes and extruded to prepare a pellet-like master batch.

Then, 2,5-dimethyl-2,5-di(t-butyl-peroxy)hexane (hereinafter referred to as "organic peroxides", 0.04 part by weight based on 100 parts by weight of the master batch) was intimately blended with the master batch in a Henschel mixer for 3 minutes.

The resulting blend was subjected to a dynamic heat treatment at a temperature within the range of 240-260°C for about 30 seconds in a twin-screw kneading extruder (TEX-44HC manufactured by Nippon Seikosho Co.) to obtain a partially crosslinked thermoplastic elastomer pellets.

The resulting pellets were shaped into a thermoplastic elastomer sheet of 1 mm thick by a T-die sheet forming machine and light resistance of the sheet was evaluated.

### Example 2

Example 1 was repeated except that oil-extended EPDM-D2 (70 parts by weight, ML₁₊₄ 100°C=78) mentioned below was used in place of the oil-extended EPDM-D1 (70 parts by weight) and the crosslinking aid (0.2 part by weight in place of 0.4 part by weight, Sumifine BM manufactured by Sumitomo Chemical Co., Ltd.) was used. The oil-extended EPDM-D2 was prepared by adding a mineral oil (40 parts by weight based on 100 parts by weight of EPDM-D2, Diana Process Oil PW-380 manufactured by Idemitsu Kosan Co.) to a solution of EPDM-D2 (5% by weight, DCPD, iodine value=10, propylene=30% by weight, and ML₁₊₄ 100°C=143) in hexane and then subjecting the solution to steam stripping to remove the solvent.

### Example 3

Example 2 was repeated except that polypropylene-2 (30 parts by weight, MFR=2.2 g/10 min, homopolymer type) was used in place of the polypropylene-1 (30 parts by weight).

### Example 4

Master batch pellets were prepared in a Banbury mixer using EPDM-D3 (70 parts by weight, DCPD, iodine value = 8, propylene = 50% by weight, ML₁₊₄ 100°C=86), polypropylene-2 (30 parts by weight) and the same cross-linking aid, light stabilizer and heat stabilizer as used in Example 2. Thereafter, the same dynamic heat treatment procedure as in Example 2 was repeated.

### Example 5

Example 4 was repeated except that EPDM-D4 (70 parts by weight, DCPD, iodine value = 18, propylene = 27% by weight, ML₁₊₄ 100°C=90) was used in place of the EPDM-D3 (70 parts by weight).

### Example 6

Example 4 was repeated except that EPDM-D5 (70 parts by weight, DCPD, iodine value=10, propylene=49% by weight, ML₁₊₄ 100°C=43) was used in place of the EPDM-D3 (70 parts by weight).

### Example 7

Example 4 was repeated except that a mineral oil (15 parts by weight based on 85 parts by weight in all of the EPDM-D3 and the polypropylene-2, Diana Process Oil PW-380 manufactured by Idemitsu Kosan Co.) was added in preparation of the master batch in place of the 100 parts by weight of a mixture of EPDM-D3 (70 parts by weight) and polypropylene-2 (30 parts by weight).

### Example 8

Example 7 was repeated except that Thanol LS 770 (0.4 part by weight, manufactured by Ciba-Geigy Corp.) was additionally added as a light stabilizer in preparation of the master batch.

### Comparative Example 1

Example 1 was repeated except that oil-extended EPDM-E1 (70 parts by weight, ML₁₊₄ 100°C=54) mentioned below was used in place of the oil-extended EPDM-D1 (70 parts by weight). The oil-extended EPDM-E1 was obtained by adding a mineral oil (100 parts by weight based on 100 parts by weight EPDM-E1, [non-conjugated diene = ethylidenenorbornene (ENB), iodine value=12, propylene = 28% by weight, and ML₁₊₄ 100°C = 245]; Diana Process Oil PW-380 manufactured by Idemitsu Kosan Co.) to a solution of EPDM-E1 (5% by weight) in hexane.

### Comparative Example 2

Example 2 was repeated except that oil-extended EPDM-E2 (70 parts by weight) mentioned below was used in place of the oil-extended EPDM-D2 (70 parts by weight). The oil-extended EPDM-E2 was obtained by adding a mineral oil (40 parts by weight based on 100 parts by weight of EPDM-E2 [ENB, iodine value = 11, propylene = 30 by weight, and ML₁₊₄ 100°C=145], Diana Process Oil PW-380 manufactured by Idemitsu Kosan Co.) to a solution of EPDM-E2 (5% by weight) in hexane.

### Comparative Example 3

Example 3 was repeated except that the oil-extended EPDM-E2 (70 parts by weight) was used in place of the oil-extended EPDM-D2 (70 parts by weight).

### Comparative Example 4

Example 4 was repeated except that EPDM-E3 (70 parts by weight, ENB, iodine value = 22, propylene = 45% by weight, ML₁₊₄ 100°C=77) was used in place of the EPDM-D3 (70 parts by weight).

### Comparative Example 5

Example 4 was repeated except that EPDM-E4 (70 parts by weight, ENB, iodine value = 12, propylene = 31% by weight, ML₁₊₄ 100°C=92) was used in place of the EPDM-D3 (70 parts by weight).

### Comparative Example 6

Comparative Example 5 was repeated except that a mineral oil (15 parts by weight based on 85 parts by weight in all of the EPDM-E4 and the polypropylene-2, Diana Process Oil PW-380 manufactured by Idemitsu Kosan Co.) was added in preparation of the master batch in place of 100 parts by weight of a mixture of EPDM-E4 (70 parts by weight) and polypropylene-2 (30 parts by weight).

Results of evaluation on light resistance of the products in Examples 1-8 and Comparative Examples 1-6 are shown in Tables 1 and 2.

**Table 1**

| | Example | | | | | | | |
|---|---|---|---|---|---|---|---|---|
| | 1 | 2 | 3 | 4 | 5 | 6 | 7 | 8 |
| Breaking extension before UV irradiation | 810 | 820 | 800 | 460 | 450 | 450 | 490 | 530 |
| Breaking extension after UV irradiation | 750 | 750 | 710 | 470 | 390 | 410 | 460 | 480 |
| Retension of breaking extension | 93 | 91 | 89 | 102 | 87 | 91 | 94 | 91 |

**Table 2**

| | Comparative Example | | | | | |
|---|---|---|---|---|---|---|
| | 1 | 2 | 3 | 4 | 5 | 6 |
| Breaking extension before UV irradiation | 770 | 860 | 810 | 520 | 660 | 720 |
| Breaking extension after UV irradiation | 430 | 420 | 400 | 280 | 300 | 350 |
| Retension of breaking extension | 56 | 49 | 49 | 54 | 45 | 49 |

### Example 9

On the surface of the thermoplastic elastomer sheet obtained in Example 1 was coated Hicope U L-4001 (manufactured by Tokushu Shikiryo Kogyo Co.) as an undercoating agent for a surface treatment of the sheet at a thickness of 1-3 µ m, and the sheet was dried at 70°C for 5 minutes. On the undercoat was further coated an urethane elastomer top coating agent, Hicope V EU-684 (manufactured by Tokushu Shikiryo Kogyo Co.). The sheet was dried to obtain a topcoat layer of 2-5µ m thick. On the back side of the sheet was coated Joitack AD-471B (manufactured by Tokushu Shikiryo Kogyo Co.) as an adhesive to urethane and the coated sheet was dried.

The coated sheet was subjected to drape forming with a vacuum forming machine (TF-1-16-VP manufactured by Nakakura Kihan Co., mold: instrument panel model) so that the back side of the sheet was brought into contact with the mold until a vacuum-formed covering material was prepared.

A semirigid urethane foam of 0.16 g/cm³ in density obtained by mixing and pouring isocyanate and polyol (1:2) manufactured by Sumitomo Bayer Urethane Co. was laminated on the back side of this covering material to obtain an instrument panel laminate.

A test specimen (7.5 cm x 7.5 cm) was cut out from the resulting laminate and evaluated on light resistance after irradiation was made with ultraviolet rays for 500 hours (ultraviolet fadeometer FAL-SH manufactured by Suga Shikenki Co., black panel temperature 83°C).

After the light resistance test, the covering material layer and the semirigid urethane foam layer were separated off from the laminate. The covering material layer was subjected to tensile strength test. Thickness of the covering material layer was 0.83 mm.

### Example 10

A thermoplastic elastomer sheet of 0.8 mm thick was prepared from the thermoplastic elastomer pellets obtained in Example 3 using a T-die extrusion machine. At this time, a polypropylene foamed sheet (PPSM 15030 manufactured by Toray Industries, Inc.) was heat laminated on the elastomer sheet to obtain a laminate sheet.

On the surface of this laminate sheet were coated the same undercoating agent and topcoating agent as used on the surface of the sheet in Example 9 to obtain a laminated sheet for molding.

A door trim laminate having the resulting sheet as a covering material on polypropylene (Sumitomo Noblen AZ 564 manufactured by Sumitomo Chemical Co., Ltd.) was prepared by a stamping molding machine (resin feeding unit: manufactured by Sato Tekkosho Co. and press unit: manufactured by Kawasaki Yuko Co.) using a door trim model mold.

A test specimen was cut out from the resulting laminate in the same manner as in Example 9 and subjected to the light resistance test for 500 hours.

After the light resistance test, the covering material layer and the polypropylene foamed sheet layer were separated off from the laminate, and the covering material layer was subjected to the tensile strength test. Thickness of the separated covering material layer was 0.52 mm.

### Comparative Example 7

The thermoplastic elastomer obtained in Comparative Example 1 was subjected to the same evaluation on light resistance as in Example 9. Thickness of the covering material layer was 0.85 mm.

### Comparative Example 8

The thermoplastic elastomer obtained in Comparative Example 3 was subjected to the same evaluation on light resistance as in Example 10. Thickness of the covering material layer was 0.51 mm.

The results of evaluation on light resistance in Examples 9-10 and Comparative Examples 7-8 are shown in Table 3.

**Table 3**

| | Example | | Comparative Example | |
|---|---|---|---|---|
| | 9 | 10 | 7 | 8 |
| Breaking extension before UV irradiation | 800 | 770 | 810 | 780 |
| Breaking extension after UV irradiation | 680 | 710 | 370 | 380 |
| Retension of breaking extension | 85 | 92 | 46 | 49 |

As explained above, the present invention provides an olefinic elastomer composition suitable for use as covering materials which require a large light resistance and further provides covering materials for industrial parts prepared from said composition.

## Claims

1. An elastomer composition for light-resistant covering materials obtainable by partially cross-linking a mixture comprising (A) 100 parts by weight in total of at least one terpolymer rubber having a 100°C Mooney viscosity (ML₁₊₄ 100°C) of 30 to 350 selected from ethylene-propylene-dicyclopentadiene terpolymer rubbers and ethylene-butene-1-dicyclopentadiene terpolymer rubbers, (B) 5 to 150 parts by weight of an olefinic polymer and (C) 0 to 150 parts by weight of a mineral oil.

2. An elastomer composition for light-resistant covering materials obtainable by partially cross-linking a mixture comprising 40 to 95% by weight of an oil-extended ethylene terpolymer rubber and 5 to 60% by weight of an olefinic polymer, the oil-extended ethylene terpolymer rubber comprising a terpolymer rubber component comprising at least one ethylene terpolymer rubber having a 100°C Mooney viscosity (M₁₊₄ 100°C) of 30 to 350 selected from ethylene propylene-dicyclopentadiene terpolymer rubbers and ethylene-butene-1-dicyclopentadiene terpolymer rubbers and 150 parts by weight or less of a mineral oil per 100 parts by weight of the terpolymer rubber component.

3. A composition according to claim 2, wherein the oil-extended ethylene terpolymer rubber has a 100°C Mooney viscosity (ML₁₊₄ 100°C) of 30 to 350.

4. A composition according to any one of claims 1 to 3 comprising an ethylene-propylene-dicyclopentadiene terpolymer having a propylene-unit content of 10 to 55% by weight, a dicyclopentadiene-unit content of 1 to 30% by weight and the balance being ethylene-units.

5. A composition according to any one of claims 1 to 4 wherein the olefinic polymer (B) is polypropylene or a propylene-a-olefin copolymer.

6. A process for producing a composition according to any one of claims 1 to 5 comprising partially cross linking a mixture comprising (A) 100 parts by weight in total of at least one terpolymer rubber having a 100°C Mooney viscosity (ML₁₊₄ 100°C) of 30 to 350 selected from ethylene-propylene-dicyclopentadiene terpolymer rubbers and ethylene-butene-1-dicyclopentadiene terpolymer rubbers, (B) 5 to 150 parts by weight of an olefinic polymer and (C) 0 to 150 parts by weight of a mineral oil or partially cross-linking a mixture comprising 40 to 95% by weight of an oil-extended ethylene terpolymer rubber and 5 to 60% by weight of an olefinic polymer, the oil-extended ethylene terpolymer rubber comprising a terpolymer rubber component comprising at least one ethylene terpolymer rubber having a 100°C Mooney viscosity (ML₁₊₄ 100°C) of 30 to 350 ethylene-propylene-dicyclopentadiene terpolymer rubbers and ethylene-butene-1-dicyclopentadiene terpolymer rubbers and 150 parts by weight or less of a mineral oil per 100 parts by weight of the terpolymer rubber component.

7. A light resistant covering material for industrial parts which comprises an elastomer composition according to any one of claims 1 to 5 or produced according to claim 6.

8. A light-resistant covering material according to claim 7 wherein the industrial parts are automobile parts.

9. A light-resistant covering material according to claim 8 wherein the automobile parts are instruments panels or door trims.

10. A shaped article having a light-resistant covering comprising a composition according to any one of claims 1 to 5 or a composition produced according to claim 6.
